# EUROPÄISCHE PATENTANMELDUNG

(11) **EP 1 574 303 A1**
(43) Veröffentlichungstag der Anmeldung: **14.09.2005**
(21) Anmeldenummer: 04005987.5
(22) Anmeldetag: 12.03.2004
(51) Int. Cl.: B26B 29/00, B26B 17/00, B26B 13/00, B23D 29/00, C25D 5/02, B26B 29/04

(54) **Schneidwerkzeug**

(71) Anmelder: Harry P. Will Werkzeugfabrik GmbH & Co. KG, 35279 Neustadt/Hessen (DE)
(72) Erfinder: Still, Thomas E., 35260 Stadtallendorf (DE)
(74) Vertreter: Olbricht, Karl Heinrich

(57) **Zusammenfassung**

Ein Drahtschneidewerkzeug (10) hat zwei doppelarmige Schenkel, die um ein Gelenk (15) schwenkbar sind. Sie weisen einerseits Griffteile (11, 13) auf und tragen andererseits an Kopfteilen (12, 14) einander zugeordnete Schneiden (16, 17), die sich direkt gegenüberstehen und chromfrei gefertigt sind. Die stahlschwarzen Schneiden (16, 17) vermitteln dem verchromten Schneidewerkzeug (10) den Eindruck von Härte und Veredelung, sie sind aber vor allem scharfkantig, weil sie während des Aufbringens der Chrombeschichtung im Unterschied zu allen übrigen Werkzeugteilen mit einer Abdeckung z.B. aus Wachs, Lack o.dgl. versehen sind und daher an den Kanten nicht gerundet werden. Bevorzugt setzt man jedoch Kappen bzw. Steckteile (19) während der Verchromung formschlüssig auf die Schneiden (16, 17). Geeignet sind Kunststoffkörper (20) mit der Schneidenform angepaßten seitlichen Ausnehmungen (23), speziell Längskerben. Ein allgemein konusförmig gestaltetes Aufsteckteil (19) mit keil- oder V-förmig angeordneten Rippen (22) kann in der geöffneten Position des Schneidwerkzeugs (10), z.B. eines Seitenschneiders, auf die Schneiden (16, 17) selbsthemmend aufgesteckt werden.

## Beschreibung

Die Erfindung betrifft ein Schneidwerkzeug gemäß dem Oberbegriff von Anspruch 1 und Schneidenabdeckungen hierfür.

Schneidwerkzeuge haben generell zwei Schenkel, die um ein Gelenk schwenkbar und doppelarmig in dem Sinne sind, daß sie einerseits Griffteile aufweisen und andererseits einander zugeordnete Schneiden tragen. Diese überlappen sich bei Scheren meist, so daß das zu schneidende oder zu trennende Material dazwischen auf Scherung beansprucht wird. Hingegen greifen die Schneiden von Drahtschneidewerkzeugen allgemein nicht übereinander, sondern sie stehen sich etwa auf einer Ebene gegenüber.

Die Vielfalt des Schneidguts, das bei Drahtschneidewerkzeugen von Stahl- oder Kupferdraht, Kabel, Stiften u.dgl. bis zu Kunststoffteilen reicht, bedingt hohe Qualität der Schneiden. Infolgedessen ist neben der Konstruktion und Anordnung des Gelenks die Gestaltung und Beibehaltung der Schneiden-Geometrie sehr wichtig für die praktische Benutzung. Das gilt gleichermaßen für Vorn- wie für Seitenschneider. Vor allem für die Anwendung an gehärtetem Stahldraht (Pianodraht) können solche Drahtschneidewerkzeuge noch mit Hebelübersetzungen ausgestattet sein, um die nötigen großen Kräfte aufzubringen.

Nun werden Handwerkzeuge wie Zangen, Schraubendreher u.dgl. vielfach durch einen Überzug gegen Einwirkungen auf die Oberfläche geschützt. Insbesondere zum Rostschutz versieht man Stahlwerkzeuge mit einer Beschichtung aus rostbeständigem Material, namentlich durch galvanische Verchromung oder Vernickelung. Im Gebrauch kann es - vielleicht schon bei der Erstbenutzung oder sogar noch im Schlußtest des Herstellers - dazu kommen, daß an der Beanspruchungsstelle, insbesondere also an einer Schneide, ein Abplatzen des Überzugs stattfindet. Das Erscheinungsbild wirkt dann als Qualitätsminderung, selbst wo in Wirklichkeit keinerlei Beeinträchtigung der Funktion eingetreten ist. Vielfach führen Beschädigungen des Überzugs wie Risse oder Löcher aber auch dazu, daß an Einzelstellen des Werkzeugs auf Dauer eine chemische bzw. klimatische Veränderung eintritt, die auch seine Gebrauchstüchtigkeit herabsetzt. Vor allem bei hartem Montageeinsatz ist dann geringere Haltbarkeit gegeben.

Es ist Ziel der Erfindung, Abhilfe zu schaffen und auf einfache Weise sicherzustellen, daß ein Handwerkzeug mit unveränderlichem Erscheinungsbild herstellbar ist und daß jedenfalls an seinen gebrauchsbeanspruchten Teilen keine Beeinträchtigung durch Beschädigung eines Überzugs eintreten kann. Speziell soll ein Schneidwerkzeug mit dauerhaft gleichmäßigen Eigenschaften erzeugt werden können.

Hauptmerkmale eines erfindungsgemäßen Schneidwerkzeugs sind in Anspruch 1 angegeben; Ausgestaltungen hiervon sind Gegenstand der Ansprüche 2 und 3. Eine erfindungsgemäße Schneidenabdeckung ist in Anspruch 4 prinzipiell definiert; Weiterbildungen dazu sind in den Ansprüchen 5 bis 7 enthalten.

Bei einem Schneidwerkzeug mit zwei Schenkeln, die um ein Gelenk schwenkbar und in der Weise doppelarmig sind, daß sie einerseits Griffteile aufweisen und andererseits an Kopfteilen einander zugeordnete Schneiden tragen, die sich insbesondere in einer Ebene gegenüberstehen, zeichnet sich die Erfindung gemäß Anspruch 1 durch chromfrei gefertigte Schneiden aus. Im praktischen Gebrauch kann daher beim Durchtrennen von Hartgut wie Stahldraht nun kein Chrom abplatzen, wogegen mit verchromten Schneiden sehr häufig Abplatzer auftreten. Die ausgelieferten Werkzeuge sind trotz Endtest mängelfrei. Die Schneiden behalten die Rohstahlfarbe, sind also schwarzgrau bzw. schwarz, was zu den übrigen Werkzeugteilen kontrastiert und den Eindruck besonderer Qualität unterstützt.

Die Maßnahme, die Werkzeug-Angriffsflächen von vornherein chromfrei zu fertigen, hebt sich vom Stand der Technik überraschend ab. Noch in DE-A1-100 53 078 wurde für ein Schraubwerkzeug vorgeschlagen, seine Arbeitsflächen mit Laserstrahlen zu behandeln, um kleine Vertiefungen mit harten Randrippen zu erzeugen. Dabei wurde zum Teil vorgesehen, daß eine vorherige Verchromung z.B. einer Schraubendreherklinge mit der Laserbestrahlung nachträglich wieder entfernt wird. Man hat also überhöhte Fertigungskosten in Kauf genommen, die durch Aufbringen und aufwendiges Wiederabtragen einer Beschichtung sozusagen doppelt anfallen. Die Erfindung vermeidet solche Unwirtschaftlichkeit.

Auf besonders ökonomische Weise lassen sich chromfreie Schneiden erzielen, indem man sie im Unterschied zu allen übrigen Teilen des Werkzeugs während des Aufbringens der Chrombeschichtung mit einer Abdeckung versieht. Eine solche kann aus Wachs, Lack o.dgl. bestehen, wobei man einen derartigen Auftrag leicht durch Lösen, Abwaschen usw. entfernen kann, gewöhnlich ohne besonderen Aufwand einfach durch ein in der herkömmlichen Fertigung ohnehin benutztes Reinigungs- oder Tauchbad.

Bevorzugt verwendet man nach der Erfindung jedoch formangepaßte Kappen bzw. Aufsteckteile, die während des Arbeitsgangs der Verchromung auf den Schneiden sitzen und danach ständig wiederverwendbar sind. Geeignete Abdeckteile haben namentlich einen Kunststoffkörper mit seitlichen Ausnehmungen, die der Schneidengestalt exakt angepaßt sind. Mit besonderem Vorteil ist der Kunststoffkörper auf den Schneiden des Werkzeugs selbsthemmend festsetzbar. Speziell zur Verwendung bei einem Seitenschneider dient ein konusförmig gestaltetes Aufsteckteil, das keil- oder V-förmig angeordnete Rippen mit Längskerben aufweist und in der geöffneten Position des Werkzeugs auf die Schneiden formschlüssig aufsteckbar ist.

Ein wichtiger Vorteil für das Werkzeug wird dadurch bewirkt, daß die Schneiden während der galvanischen Behandlung abgedeckt sind. Die Soll-Schneidengeometrie bleibt nämlich voll erhalten und die Schneidkanten sind scharf, während bei üblicher Verchromung ohne Abdeckung unvermeidlich eine Abrundung der Kanten entsteht. Mit dem galvanischen Verchromen geht auch generell die Gefahr einer Wasserstoff-Versprödung einher, was bei herkömmlichen Werkzeugen häufig zum Schneidenbruch führt. Diese Gefahr ist bei der erfindungsgemäßen Herstellung naturgemäß gering.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht eines Seitenschneiders in geschlossener Position,
- Fig. 2: eine Teilansicht des Seitenschneiders von Fig. 1 in geöffneter Position,
- Fig. 3a Fig. 3b Fig. 3c: je eine Draufsicht, Seitenansicht bzw. Stirnansicht eines Abdeckteils,
- Fig. 4: eine vergrößerte Teilansicht entsprechend Fig. 2, jedoch mit aufgestecktem Abdeckteil entsprechend Fig. 3a.

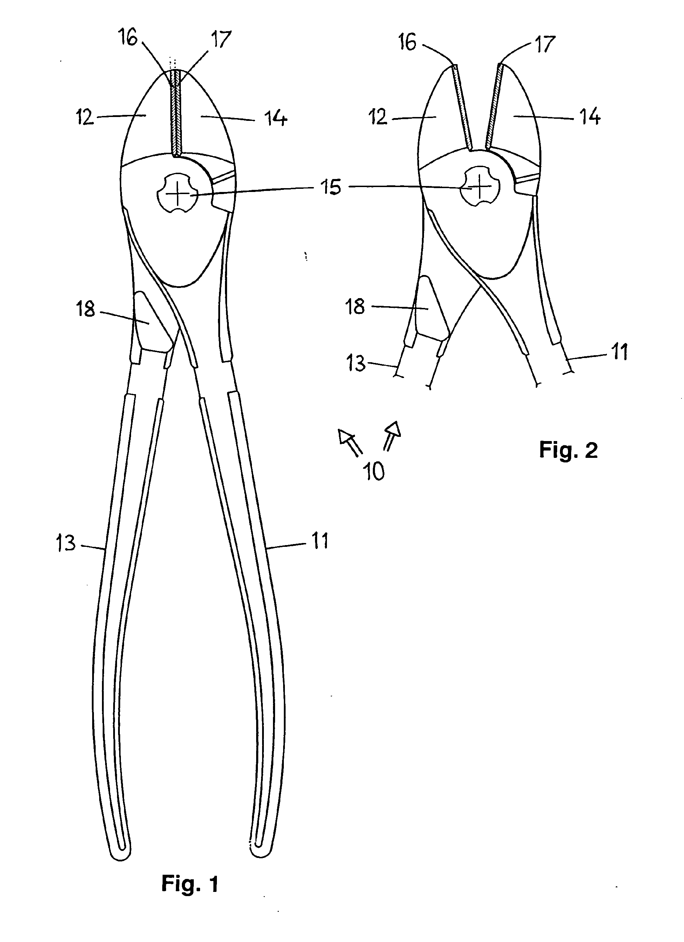

Aus Fig. 1 und 2 ist das Ausführungsbeispiel eines Seitenschneiders 10 ersichtlich. Er ist von allgemein üblicher Konstruktion und besitzt zwei Schenkel mit Griffteilen 11, 13, die über ein Gewerbe 15, d.h. ein Gelenk, schwenkbar verbunden sind und an äußeren Abschnitten, nämlich an Kopfteilen 12, 14, einander zugewandte Schneiden 16, 17 aufweisen. Diese sind auf herkömmliche Weise geschliffen, gewöhnlich schräg zu der von den Griff- bzw. Kopfteilen bestimmten Ebene, so daß sich scharfe Schneidkanten gegenüberstehen. An einem der Griffteile, z.B. 13, kann ein Sicherheitsanschlag 18 vorhanden sein.

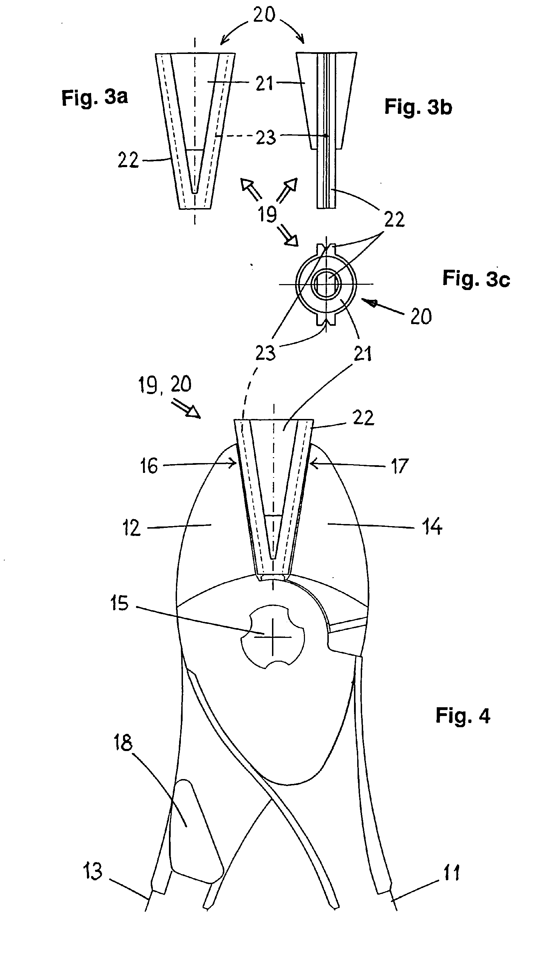

Der Seitenschneider 10 ist insgesamt verchromt oder kann es sein, ein nachträgliches Entfernen einer Chrombeschichtung an den Schneiden 16, 17 entfällt aber in jedem Fall, weil diese von Anfang an chromfrei sind. Fig. 3a bis 3c zeigen ein hierzu während der Verchromung dienliches Aufsteckteil 19, das einen generell keil- oder V-förmigen Kunststoffkörper 20 aufweist. Dieser hat an einem Konus 21 seitliche Rippen 22, die sich diametral gegenüberstehende Flanken bilden und jeweils Ausnehmungen 23 haben. Letztere sind bevorzugt Längskerben, die der Schneidengeometrie des Werkzeugs 10 exakt angepaßt sind. Ist das Aufsteckteil 19 auf den Seitenschneider 10 in seiner geöffneten Position aufgesteckt, so werden die Schneiden 16, 17 von den Rippen 22 bis an die Flächen der Kopfteile 12, 14 heran vollständig abgedeckt.

Die Erfindung ist nicht auf eine der vorbeschriebenen Ausführungsformen beschränkt, sondern in vielfältiger Weise abwandelbar. Man erkennt jedoch, daß ein Schneidwerkzeug 10, namentlich ein Drahtschneidewerkzeug, zwei Schenkel hat, die um ein Gelenk 15 schwenkbar und in der Weise doppelarmig sind, daß sie einerseits Griffteile 11, 13 aufweisen und andererseits an Kopfteilen 12, 14 einander zugeordnete Schneiden 16, 17 tragen, die sich direkt gegenüberstehen und chromfrei gefertigt sind. Die stahlschwarzen Schneiden 16, 17 vermitteln dem verchromten Schneidewerkzeug 10 den Eindruck von Härte und Veredelung, sie sind aber vor allem scharfkantig, weil sie während des Aufbringens der Chrombeschichtung im Unterschied zu allen übrigen Werkzeugteilen mit einer Abdeckung z.B. aus Wachs, Lack o.dgl. versehen sind und daher an den Kanten nicht gerundet werden. Bevorzugt setzt man nach der Erfindung jedoch Kappen bzw. Steckteile 19 während der Verchromung formschlüssig auf die Schneiden 16, 17. Geeignet sind Kunststoffkörper 20 mit der Schneidenform angepaßten seitlichen Ausnehmungen 23, speziell Längskerben. Ein allgemein konusförmig gestaltetes Aufsteckteil 19 mit keil- oder V-förmig angeordneten Rippen 22 kann in der geöffneten Position des Schneidwerkzeugs 10 auf die Schneiden 16, 17 selbsthemmend aufgesteckt werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Seitenschneider
- 11, 13: Griffteile / Schenkel
- 12, 14: Kopfteile
- 15: Gelenk
- 16, 17: Schneiden
- 18: Sicherheitsanschlag
- 19: Aufsteckteil
- 20: Kunststoffkörper
- 21: Konus
- 22: Flanken(teile) / Rippen
- 23: Ausnehmungen / Kerben

## Patentansprüche

1. Schneidwerkzeug (10) mit zwei Schenkeln, die um ein Gelenk (15) schwenkbar und in der Weise doppelarmig sind, daß sie einerseits Griffteile (11, 13) aufweisen und andererseits an Kopfteilen (12, 14) einander zugeordnete Schneiden (16, 17) tragen, die sich insbesondere in einer Ebene gegenüberstehen, **gekennzeichnet durch** chromfrei gefertigte Schneiden (16, 17).

2. Schneidwerkzeug nach Anspruch 1, **dadurch gekennzeichnet, daß** während einer Verchromung eine Schneidenabdeckung in Form eines Auftrags von Wachs, Lack o.dgl. vorhanden ist.

3. Schneidwerkzeug nach Anspruch 1, **dadurch gekennzeichnet, daß** während einer Verchromung eine Schneidenabdeckung in Gestalt formangepaßter Kappen bzw. Aufsteckteile (19, 20) vorhanden ist.

4. Abdeckteil (19) für ein Schneidwerkzeug (10) nach einem der Ansprüche 1 bis 3, **gekennzeichnet durch** einen Kunststoffkörper (20), welcher der Schneidenform angepaßte seitliche Ausnehmungen (23) hat.

5. Abdeckteil nach Anspruch 4, **dadurch gekennzeichnet, daß** der Kunststoffkörper (20) auf den Schneiden (16, 17) des Schneidwerkzeugs (10) selbsthemmend festsetzbar ist.

6. Abdeckteil nach Anspruch 4 oder 5, **dadurch gekennzeichnet, daß** der Kunststoffkörper (20) zur Verwendung bei einem Seitenschneider (10) allgemein konusförmig gestaltet ist und keil- oder V-förmig angeordnete Rippen (22) aufweist.

7. Abdeckteil nach Anspruch 6, **dadurch gekennzeichnet, daß** der Kunststoffkörper (20) in der geöffneten Position des Schneidwerkzeugs (10) auf die Schneiden (16, 17) formschlüssig aufsteckbar ist.
